# EUROPEAN PATENT APPLICATION

(11) **EP 2 796 349 A1**
(43) Date of publication of application: **29.10.2014**
(21) Application number: 12859901.6
(22) Date of filing: 18.12.2012
(51) Int. Cl.: B62J 9/00, B62J 1/12, B62J 37/00, B62J 99/00

(54) **SADDLE-RIDDEN ELECTRIC VEHICLE**

(30) Priority: 22.12.2011 JP 2011280767; 14.12.2012 JP 2012273284
(71) Applicant: Yamaha Hatsudoki Kabushiki Kaisha, Iwata-shi, Shizuoka 438-8501 (JP)
(72) Inventor: WATANABE Hisashi, Iwata-shi Shizuoka 438-8501 (JP); WATANABE Takeshi, Iwata-shi Shizuoka 438-8501 (JP)
(74) Representative: Grünecker, Kinkeldey, Stockmair & Schwanhäusser
(86) International application number: PCT/JP2012/082780
(87) International publication number: WO 2013/094597

(57) **Abstract**

An object of the invention is to provide a straddle-type electric vehicle in which a battery can be charged while the portable charger being water proofed even though the vehicle is placed in a position without any roofs. When the portable charger (40) charges the battery (6) while being accommodated in the second accommodation portion (S2), the seat (29), the opening portion (30) of the second accommodation portion (S2), the lock mechanism (70) and the ventilation port (49) of the portable charger (40) function as a ventilation portion to thereby ventilate inside of the second accommodation portion (S2). Thus, the heat generated in the portable charger (40) at the time of charging is efficiently dissipated outside. Accordingly, the battery (6) is charged while avoiding an interior of the second accommodation portion (S2) from reaching high temperature even in a state that the seat (29) covers the opening portion (30) of the second accommodation portion (S2) and the portable charger (40) is water proofed by the seat (29).

## Description

### Technical field

The present invention relates to a straddle-type electric vehicle using an electric motor as a driving source.

### Background art

Conventionally, there is an electric motorcycle having a portable charger which is detachable from a vehicle. Such an electric motorcycle is able to run in a light state by removing the portable charger. Further, when it runs long distance, for charging a battery as required, it is able to run while accommodating the charger in an accommodation portion provided under a seat cover.

However, when charging the battery by using the portable charger, it is required for a space for place the portable charger in a stable state.
Then, it is proposed an electric motorcycle which has an attachment portion to which the portable charger is attached on a step floor of the electric motorcycle when charging the battery (refer to Patent Literature 1).

### Related Art Literature

### Patent Literature

Patent Literature 1: International Publication WO2011/024326

### Summary of the Invention

### Problem that the Invention is to Solve

However, it is the present situation that the place where the battery of the electric motorcycle is able to be charged is limited, it is considerable that the battery is charged in a state that the electric motorcycle is placed in a place without any roofs. In a configuration in which the battery is charged in a state that the portable charger is attached to the attachment portion provided on the step floor, when the battery is charged in a state that the electric motorcycle is placed in the place without any roofs, there is a fear that the portable charger is exposed to rain water.

The present invention is achieved in view of the above problem and an object of the present invention is to provide a straddle-type electric vehicle in which a battery is charged in a state that a portable charger is waterproofed.

### Means for Solving the Problem

With a view to achieving the object, according to a first aspect of the invention, there is provided a straddle-type electric vehicle including:
an accommodation portion including an opening portion and a lid which is able to open and close the opening portion;
a portable charger which is configured to be accommodated in the accommodation portion; and
a receptacle connected with a battery mounted on a vehicle,
wherein the portable charger includes a charger main body, a power plug connected with a power source, a power cable which connects the power plug with the charger main body, a charge plug connected with the receptacle and a charge cable which connects the charger main body with the charge plug,
the accommodation portion includes a power cable pulling out portion which pulls out the power cable from inside to outside of the accommodation portion in a state that the portable charger is accommodated in the accommodation portion and a ventilation portion which ventilates inside of the accommodation portion in a state that the portable charger is accommodated in the accommodation portion,
the lid is closable the opening of the accommodation portion when the power cable is not pulled out from the inside to the outside of the accommodation portion through the power cable pulling out portion and
the ventilation portion ventilates the inside of the accommodation portion when the power cable is pulled out from the inside to the outside of the accommodation portion through the power cable pulling out portion.

According to the first aspect of the straddle-type electric vehicle, the lid is able to open the opening portion of the accommodation portion when the power cable is not pulled out from inside to outside of the accommodation portion through the power cable pulling out portion (that is, normal state of using a vehicle). Thus, the rain water or dust is prevented from invading into the accommodation portion. Further, in a case where the battery is charged while the portable charger being accommodated in the accommodation portion and the power cable is pulled out from inside to outside of the accommodation portion through the power cable pulling out portion, because the ventilation portion ventilates the interior of the accommodation portion, the heat generated in the portable charger at the time of charging is efficiently dissipated from inside to outside of the accommodation portion. Thus, even in the state the lid covers the opening portion of the accommodation portion, the battery can be charged while avoiding the interior of the accommodation portion from reaching high temperature. Accordingly, the battery is charged by using the portable charger accommodated in the accommodation portion while covering the opening portion of the accommodation portion with the lid. For an example, even the vehicle is placed in a position without any roofs, the battery is charged in a state that the portable charger is water proofed by the lid.

According to a second aspect of the invention, in the straddle-type electric vehicle according to the first aspect of the invention,
the receptacle is provided on a position where a connection port thereof opens inside of the accommodation portion and the portable charger is accommodated in the accommodation portion in a state that the charge plug is connected thereto.

According to the straddle-type electric vehicle according to the second aspect of the invention, because the connecting part between the connection port of the receptacle and the charge plug is accommodated in the accommodation portion and is not exposed outside, the connecting part is protected from dust or water drop of outside.

According to a third aspect of the invention, in the straddle-type electric vehicle according to the first aspect of the invention, the receptacle is provided in a position where a connection port thereof opens outside of the accommodation portion and the accommodation portion includes a charge cable pulling out portion which pulls out the charge cable from inside to outside of the accommodation portion while the portable charger being accommodated in the accommodation portion.

According to the straddle-type electric vehicle according to the third aspect of the invention, because the receptacle connects with the charge plug outside of the accommodation portion, an interior space of the accommodation portion is assured large.

According to fourth aspect of the invention, in the straddle-type electric vehicle according to any one of the first to third aspects of the invention, at least a part of the power cable pulling out portion and the ventilation portion are made up of the lid and the opening portion, the power cable is pulled out from a space between the lid and the opening portion and the accommodation portion is ventilated through the space between the lid and the opening portion.

According to the straddle-type electric vehicle according to the fourth aspect of the invention, the interior of the accommodation portion is ventilated by using the gap between the lid and the opening of the accommodation portion.

According to a fifth aspect of the invention, in the straddle-type electric vehicle according to any one of the first through fourth aspects of the invention, the lid is configured to move among a close position in which it closes the opening portion of the accommodation portion, an open position in which it opens the opening portion of the accommodation portion and a gap forming position in which it forms a gap between the lid and the opening portion, the accommodation portion includes a lid support mechanism which retains the lid in the gap forming position and the lid, the opening portion and the lid support mechanism make up at least a part of the ventilation portion.

According to the straddle-type electric vehicle according to the fifth aspect of the invention, because the lid is retained in the gap forming position, the heat is efficiently dissipated from inside to outside of the accommodation portion through the gap formed between the lid and the opening portion.

According to a sixth aspect of the invention, in the straddle-type electric vehicle according to the fifth aspect of the invention, the lid support mechanism is a lock mechanism which locks the lid when the lid is in the close position and the gap forming position.

According to the straddle-type electric vehicle according to the sixth aspect of the invention, because the lid is locked in the gap forming position when the battery is charged while the portable charger being accommodated in the accommodation portion, the interior of the accommodation portion is ventilated and also it is prevented the portable charger which is accommodated in the accommodation portion from being theft.

According to a seventh aspect of the invention, in the straddle-type electric vehicle according to any one of the first to six aspects of the invention, the portable charger includes a fan device and the fan device is configured to work while the portable charger being accommodated in the accommodation portion and to enhance ventilation of an interior of the accommodation portion.

According to the straddle-type electric vehicle according to the seventh aspect of the invention, the fan device is driven at the time of charging, the heat is efficiently dissipated from inside to outside of the accommodation portion.

According to an eighth aspect of the invention, in the straddle-type electric vehicle according to any one of the first to seventh aspects of the invention, the lid is a seat.

According to the straddle-type electric vehicle according to the eighth aspect of the invention, in a design of vehicle body of the straddle-type electric vehicle, the limited design space is effectively utilized and the space of the accommodation portion can be assured large.

### Brief description of the drawings

Fig. 1 is a left side view of an electric motorcycle according to a first embodiment of the present invention.
Fig. 2 is a left side view showing the electric motorcycle according to the first embodiment in a state that parts such as a body cover is removed.
Fig. 3 is a partly enlarged sectional view of an accommodation portion in a front-and-rear direction in a state that a seat is closed according to the first embodiment.
Fig. 4 is a partly enlarged perspective view of the accommodation portion in a state that the seat is opened according to the first embodiment.
Fig. 5 is a partly enlarged sectional view of the accommodation portion in the front-and-rear direction showing a state that a battery is charged by using a portable charger according to the first embodiment.
Fig. 6 is a partly enlarged sectional view of an accommodation portion in the front-and-rear direction in a state that the seat is closed according to a second embodiment.
Fig. 7 is a partly enlarged sectional view of the accommodation portion in the front-and-rear direction in a state that the battery is charged by using the portable charger according to the second embodiment.
Fig. 8 is a partly enlarged perspective view of an accommodation portion showing a state that the seat is opened according to a variation example of the second embodiment. Mode for carrying out the invention

Hereinafter, referring to drawings, embodiments of a straddle-type electric vehicle according to the invention will specifically be described.

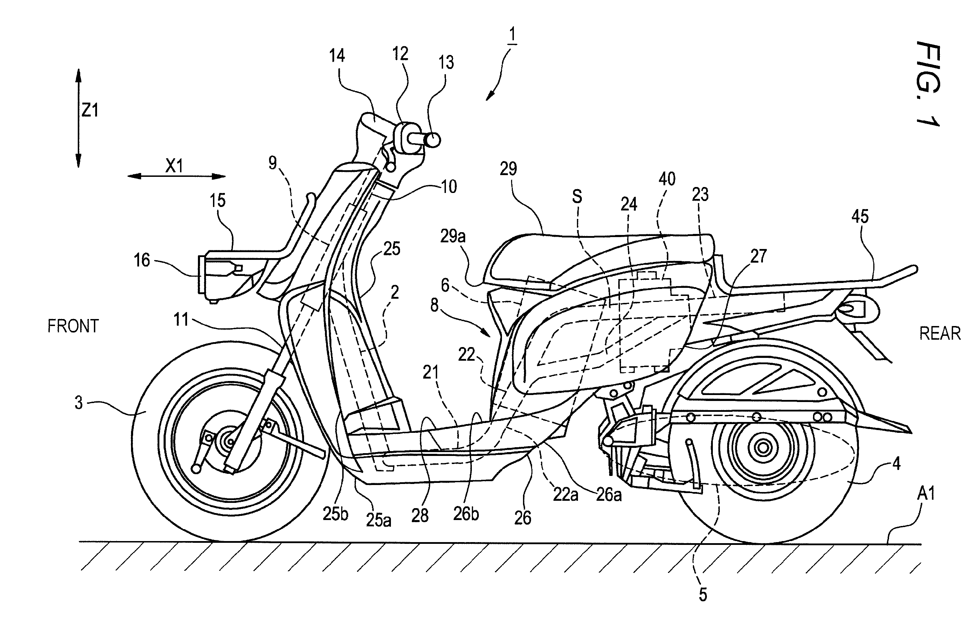

A straddle-type electric vehicle according to a first embodiment of the invention is described by referring to Figs. 1 to 5.

Fig. 1 is a left side view of a straddle-type electric motorcycle 1 which is an electric motorcycle according to a first embodiment of the present invention. In the embodiment, the electric motorcycle 1 which is a scooter is described by showing in drawings as the straddle-type electric vehicle. The electric motorcycle 1 is able to run with loading baggage on a front portion and a rear portion thereof and is suitable to use as a cargo handling vehicle.

It is noted that in the following description, directions denoted as front, rear, top, bottom, left and right are based on a viewing direction of a rider who faces forward and in a standard posture in which the electric motorcycle 1 runs straight in a horizontal plane. Further, a configuration of the electric motorcycle 1 is described based on the electric motorcycle 1 which stands vertically, a front wheel 3 and a rear wheel 4 contact on grand surface A1 and the rider is not seated.

The electric motorcycle 1 includes a body frame 2 , a front wheel 3, a rear wheel 4, an electric motor 5, a battery 6, a portable charger 40 and body cover 8. The battery 6 is chargeable secondary battery and works as a power source of the electric motor 5. That is, the electric motor 5 is driven by a power supplied from the battery and the rear wheel 4 is driven by an output of the electric motor 5, thus, the electric motorcycle 1 is able to run in the front-and-rear direction. The battery 6 is charged by using the portable charger.

Hereinbelow, an overall construction of the electric motorcycle will be described sequentially from the front of a body thereof.

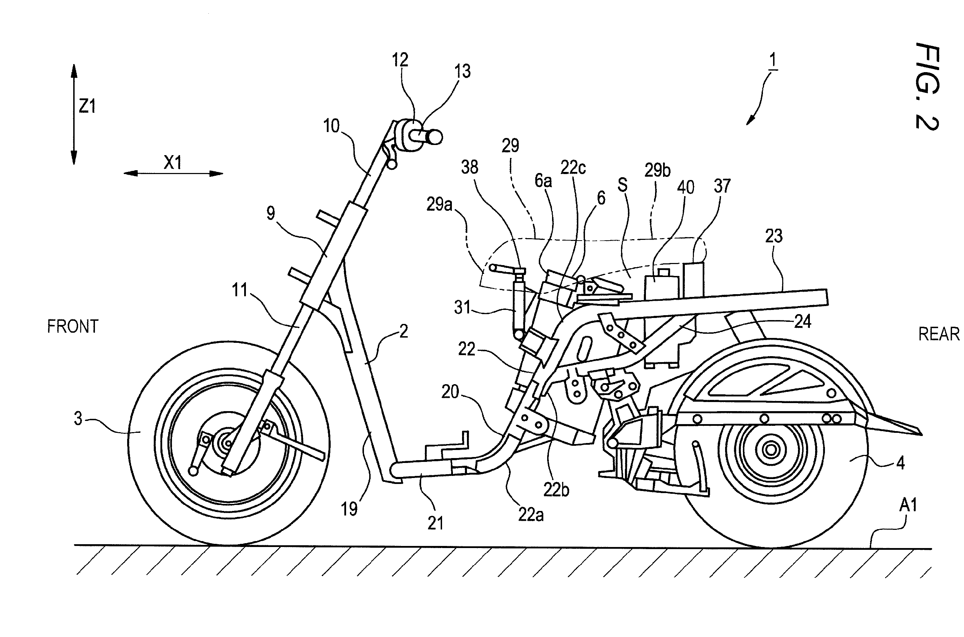

Fig. 2 is a left side view showing the electric motorcycle 1 according to the embodiment in a state that parts such as a body cover 8 is removed.

The electric motorcycle 1 includes a head pipe 9 provided on a front top portion of the electric motorcycle 1. A steering shaft 10 is turnably inserted into the head pipe 9. A pair of left and right front forks 11 is mounted at a lower end portion of the steering shaft 10. The front wheel 3 is mounted to the front forks 11.

A handlebar 12 is mounted at an upper end portion of the steering shaft 10. The rider is able to turn the steering shaft 10, the front forks 11 and the front wheel 3 about an axis of the steering shaft 10 by controlling the handlebar 12.

Grips 13 are provided individually at both left and right end portions of the handlebar 12 (a left grip only is shown). A right-hand grip makes up a throttle grip. The rider is able to turn this throttle grip to control an output of the electric motor 5.

As shown in Fig. 1, a meter 14 is provided near a center of the handlebar 12. A carrier 15 is provided lower than the meter 14. The carrier 15 is fixed to the head pipe 9. The load of the baggage loaded on the carrier 15 mainly acts on the front wheel 3 via the head pipe 9, the steering 10 and etc. A head lamp 16 is fixed to a lower portion of the carrier 15.

As shown in Fig. 2, the electric motorcycle 1 includes the body frame 2 extending rearward from the head pipe 9. The body frame 2 is formed by a pipe member made of steel. The body frame 2 includes a down tube 19, a frame main body 20 provided rearward of the down tube 19. The down tube 19 extends rearward diagonal lower from a lower portion of the head pipe 9. As viewed from the side thereof, the frame main body 20 extends rearward from a lower end portion of the down tube 19, and an intermediate portion of the down tube 19 in the front-and-rear direction X1 of the vehicle is formed into an S-shape.

The frame main body 20 includes a pair of left and right frame main bodies 20. Each frame main body 20 includes a first frame portion 21, a second frame portion 22, a third frame portion 23 and a fourth frame portion 24. The first frame portion 21 extends substantially straight rearward from the lower end portion of the down tube 19 and is slightly inclined rearward diagonal upper.

The second frame portion 22 is formed into an S-shape as viewed from the side thereof. The second frame portion 22 has a lower end portion 22a, an intermediate portion 22b and an upper end portion 22c. The lower end portion 22a is formed into a curved shape and connected to a rear end portion of the first frame portion 21. The intermediate portion 22b of the second frame 22b extends rearward diagonal upper straightly from the lower end portion 22a. As viewed from the side thereof, an inclination angle of the intermediate portion 22b relative to the first frame portion 21 is, for example, on the order of 45 degrees. The upper end portion 22c of the second frame portion 22 is formed into a curved shape and is connected to the intermediate portion 22b.

The third frame portion 23 extends straightly from the upper end portion 22c and is inclined rearward diagonal upper slightly. The fourth frame portion 24 extends rearward from the intermediate portion 22b of the second frame 22, is curved rearward diagonal upper in the middle thereof and is connected to an intermediate portion of the third frame portion 23.

As shown in Fig. 1, the electric motorcycle 1 includes the body cover 8 mounted to the body frame 2. The body cover 8 includes a front cover 25 covering the head pipe 9, a lower cover extending rearward from a lower portion of the front cover 25 and a rear cover 27 provided rearward of the front cover 25.

The front cover 25 surrounds a part of the steering shaft 10 and the head pipe 9 and also surrounds the down tube 19. The lower cover 26 extends rearward from a lower portion 25a of the front cover 25 and covers the first frame portion 21 and the lower end portion 22a of the second frame portion 22 from lower side and both left and right sides thereof. A foot rest portion 28 is provided at an upper end portion of the lower cover 26. The foot rest portion 28 is provided for the rider to rest his/her foot and is formed into substantially flat.

The rear cover 27 is, as a whole, formed so as to extend rearward diagonal upper from a rear portion 26a of the lower cover 26. The rear cover 27 covers an area of the second frame portion 22 excepting the lower end portion 22a from front side and both left and right sides thereof.

A seat 29 as a lid is provided upward of the rear cover 27. The legs of the rider seated on the seat 29 are placed on the foot rest portion 28 when the electric motorcycle is running. The foot rest portion 28 is provided between a rear surface 25b of the front cover 25 and an front end portion 29a of the seat 29 in the front-and-rear direction X1. Further, the seat 29 is provided upward of the second frame portion 22, is provided upward of a part of the third frame 23 and is provided upward of a part of the fourth frame portion 24. A part surrounded by the seat 29 and the pair of the left and right rear covers 27 makes up an accommodation portion S. That is, the accommodation portion S includes at least the pair of the left and right rear covers 27 and the third frame portion 23 and the fourth frame portion 24 of the body frame 2, makes up a part of the vehicle body having interior space in which the battery 6 and the portable charger 40 is accommodated.

As shown in Fig. 2, the seat 29 is supported on a first bracket 31 and a support bracket 37. The first bracket 31 is mounted to the intermediate portion 22b of the second frame 22. The first bracket 31 extends upward from the intermediate portion 22b. A hinge portion 38 is provided on an upper end portion of the first bracket 31. The seat 29 is supported on the first bracket 31 via the hinge portion 38. The first bracket 31 supports the seat 29 from lower side thereof. The seat 29 is able to swing around the hinge portion 38.

Note that the seat 29 may be fixed to the first bracket 31 by omitting the hinge portion 38.

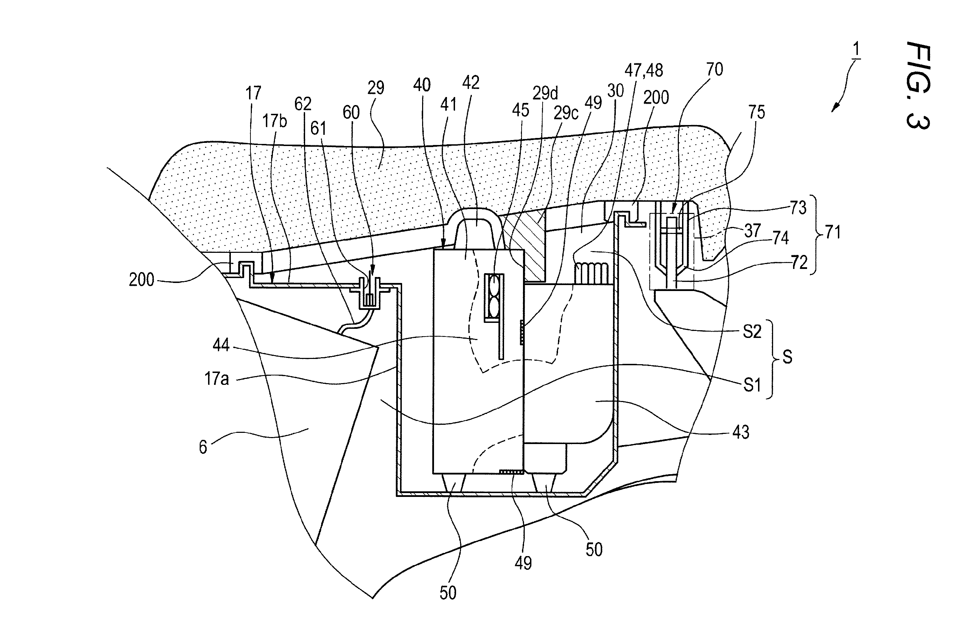

A rear portion 29b of the seat 29 is supported on the support bracket 37. The support bracket 37 is fixed to the third frame portion 23 of the body frame 2, is a shape in which it protrudes upward from the third frame portion 23 and is positioned rearward of the accommodation portion S. In the vicinity of the support bracket 37, a lock pin 72 of a lock mechanism 70 as a lid supporting mechanism is provided (refer to Fig. 3).

Fig. 3 is a partly enlarged sectional view of an accommodation portion S in a front-and-rear direction in a state that the seat 29 is closed according to the embodiment.

The accommodation portion S is divided by the parting wall 17 in the front-and-rear direction so that there are provided a first accommodation portion S1 positioned forward and a second accommodation portion S2 positioned rearward.

The parting wall 17 is formed into substantially an L-shape in section. The parting wall 17 includes a side wall portion 17a and an upper wall portion 17b. The side wall portion 17a extends in the up-and-down direction to thereby part the accommodation portion S in front-and-rear direction. The upper wall portion 17b extends forward at an upper end portion of the side wall portion 17a. The upper wall portion 17b covers the first accommodation portion S1 from top thereof . The second accommodation portion S2 is a space having an opening portion 30 at top thereof when the seat 29 is swung around the hinge portion 38. On a back portion of the seat 29, a retain portion 29c and a seal member 200 having a shape following an outer circumference of the opening portion 30 are provided. The retainer portion 29c retains an upper portion of the portable charger 40 which is accommodated in the second accommodation portion S2. The seal member 200 contacts with an upper end portion of the outer circumference of the opening portion 30 over the full circumference thereof when the seat 29 closing to thereby close the opening portion 30. Note that a configuration for closing the opening portion 30 may be obtained by contacting the back portion of the seat 29 with the upper end portion of the second accommodation portion S2 without providing the seal member 200 on the back portion of the seat 29, or making the back portion of the seat 29 and the upper end portion of the second accommodation portion S2 as a labyrinth structure.

The retainer portion 29c is formed into a reverse L-shape in section and provided with a stepped portion 29d. The stepped portion 29d contacts with a certain corner portion of an upper portion of the portable charger 40 to support the portable charger 40.

Note that the retainer portion 29c may be formed by a cushion element as far as it is able to retain the upper portion of the portable charger 40.

The battery 6 is accommodated in the first accommodation portion S1 so as to be positioned between the pair of the left and right second frame portions 22. The battery 6 is formed into substantially a rectangular shape as viewed from side thereof, a length (height) thereof in the up-and-down direction Z1 of the vehicle is made longer than a length (width) thereof in the front-and-rear direction X1. The battery 6 is arranged in a posture in which it is inclined rearward diagonal upper in a state that an upper portion thereof 6a is positioned between the first bracket 31 and the support bracket 37, and is fixed to and supported on the body frame 2 (refer to Fig. 2). Further, because the upper wall portion 17b of the parting wall 17 covers the upper portion 6a of the battery 6, the battery 6 is prevented from being taken out easily in a normal state other than the maintenance and inspection.

The second accommodation portion S2 is formed into a bottomed square tube shape in which an upper portion thereof makes up the opening portion 30. The portable charger 40 is placed in the second accommodation portion S2.

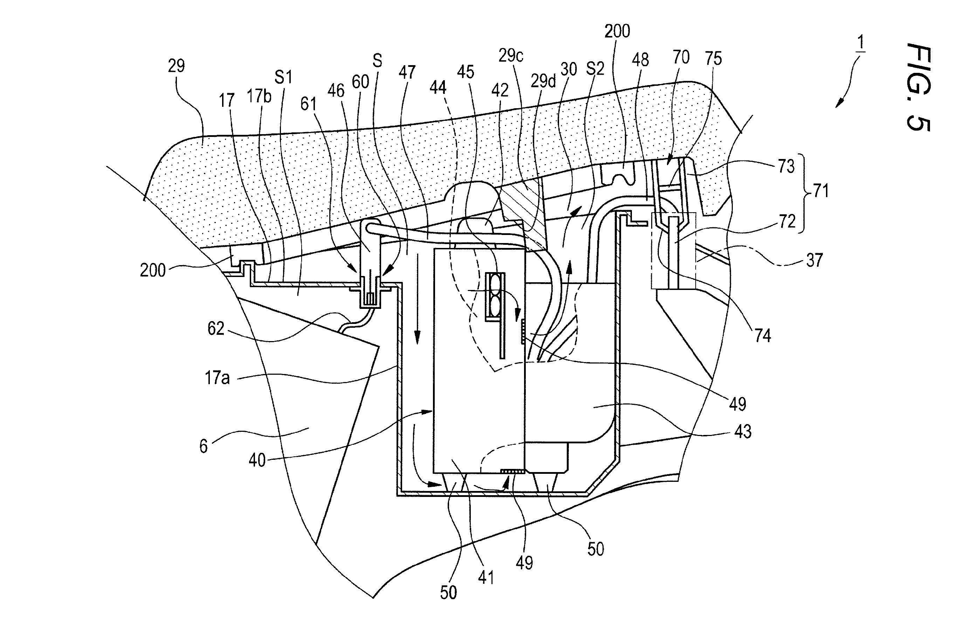

The portable charger 40 is formed into a substantially box shape. As shown in Fig. 5, the portable charger 40 includes a charger main body 41, a handle portion 42, a cable store portion 43, a charge circuit 44, a fan device 45, a charge plug 46, a power plug (not shown) connected to a power source, a charge cable 47, a power cable 48, a ventilation ports (ventilation portions) 49 and a leg portions 50. The handle portion 42 is provided at an upper portion of the charger main body 41. The cable store portion 43 is provided at a rear surface portion of the charger main body 41. The charge circuit 44 is mounted in the charger main body 41. The fan device 45 is mounted to the charge circuit 44. The charge plug 46 is to be connected with a connection port 61 of a receptacle 60 which is described later. The charge cable 47 connects the charge circuit 44 with the charge plug 46. The power cable 48 connects the charge circuit 44 with the power source. The ventilation ports 49 are respectively provided on a bottom surface portion and the rear surface portion of the charger main body 41. The leg portions 50 are provided so as to be erected on four corner portions of the bottom surface portion of the charger main body 41.

The fan device 45 is configured to be worked while the portable charger 40 being accommodated in the second accommodation portion S2. The fan device 45 functions as a ventilation enhance device which enhances ventilation of an interior of the second accommodation portion S2. Further, the cable store portion 43 is formed into a pocket shape so that an upper end portion thereof opens. The cables 47, 48 are stored in this pocket shaped interior space at the time of not using them. Further, the leg portions 50 are formed on the bottom surface portion of the charger main body 41, a gap space is formed under the charger main body 41.

Further, the receptacle 60 is provided at a center position of the upper wall portion 17b of the parting wall 17. The receptacle 60 includes the connection port 61 to which the charge plug 46 (refer to Fig. 5) of the portable charger 40 is connected. The connection port 61 is provided so as to open upward. Thus, the charge plug 46 is able to connect with the connection port 61 of the receptacle 60 even in a state that the portable charger 40 is accommodated in the second accommodation portion S2. Further, the receptacle 60 includes a connection cable 62 and the connection cable 62 is connected to the battery 6. Further, when the battery 6 is not charged, a cover (not shown) is mounted to the connection port 61 of the receptacle 60 to thereby prevent deformation due to shock from outside or an intrusion of dust.

Further, the lock mechanism 70 is, in a state that the seat 29 is closed, provided rearward of the second accommodation portion S2, is provided rearward of the back portion of the seat 29 so as to overlap with the bracket 37 and in the vicinity of the bracket 37 as viewed from side thereof. That is, the lock mechanism 70 is made up of a transmission portion (not shown) and a lock portion 71. The transmission portion is configured by including a wire, an end portion of the wire is fixed to a working portion of a key cylinder (not shown), and the other end portion is fixed to a lock pin 72 which is described later.

As shown in Fig. 3, the lock portion 71 includes a lock pin 72 provided at a rear end portion of the accommodation portion S and a lock shaft 73 provided rearward of the back portion of the seat 29. A tip end of the lock pin 72 is formed into a hook shape, and is configured to move to a lock release position from a lock position when the wire of the transmission portion is pulled. Further, the lock shaft 73 is a metal member. The lock shaft 73 is formed into a reverse A shape and tip end portions thereof are formed into an arc shape. A base end portion of the lock shaft 73 is connected with and fixed to the seat 29. A first lock portion 74 is an arc portion positioned at the tip end portion of the lock shaft 73 and a second lock portion 75 is a shaft rod portion positioned at an intermediate in the up-and-down direction of the lock shaft 73.

When a key is inserted into a determined key insertion portion (not shown) and the key is turned, the working portion of the key cylinder operates in accordance with the turn of the key. That is, when the working portion of the key cylinder turns, the wire is pulled by the working portion of the key cylinder and as a result, the lock pin 72 moves to the lock release position from the lock position. Accordingly, an engage between the lock pin 72 and the first lock portion 74 or the second lock portion of the lock shaft 73 is released to thereby release the lock.

As such, because the lock mechanism 70 is provided, when the lock pin 72 engages with the second lock portion 75 of the lock shaft 73, the seat 29 is able to be placed in a state of a close position in which the seat 29 closes the opening portion 30 of the second accommodation portion S2. Further, when the lock pin 72 engages with the first lock portion 74 of the lock shaft 73, the seat 29 is able to be placed in a state of a gap forming position in which a gap is formed between the seat 29 and the second accommodation portion S2 (in a state that the seat 29 covers the opening portion 30). Further, when the lock is released and the seat 29 is turned around the hinge portion 38, the seat 29 is able to be placed in an open portion in which the seat 29 opens the opening portion 30 of the second accommodation portion S2. That is, according to the lock mechanism 70 provided rearward of the second accommodation portion S2, the seat 29 is configured so as to be movable among the close position, the open position and the gap forming position.

When the seat 29 is in the state of the gap forming position, the rear portion of the seat 29 is pressed upward by a biasing mechanism (not shown), the seat 29 is configured so that the gap is assured widely and to cover the opening portion 30.

Further, as shown in Fig. 1, the carrier 45 is provided rearward of the seat 29. The carrier 45 is provided upward of the third frame portion 23 and is supported on the third frame portion 23. The baggage is allowed to be placed on the carrier 45. The front wheel 4 mainly bears the load of the baggage loaded on the carrier 45.

As such, the carrier 14, and the battery 6 which is heavy, the portable charger 40, the carrier 45 are aligned in the front-and-rear direction X1. Thus, when loading the baggage on the carrier 14 and the carrier 45, the load balance of the electric motorcycle 1 in the front-and-rear direction X1 is equalized. Thus, even in a state that the baggage are loaded on the carrier 14 and the carrier 45, a controllability of the electric motorcycle 1 is maintained high.

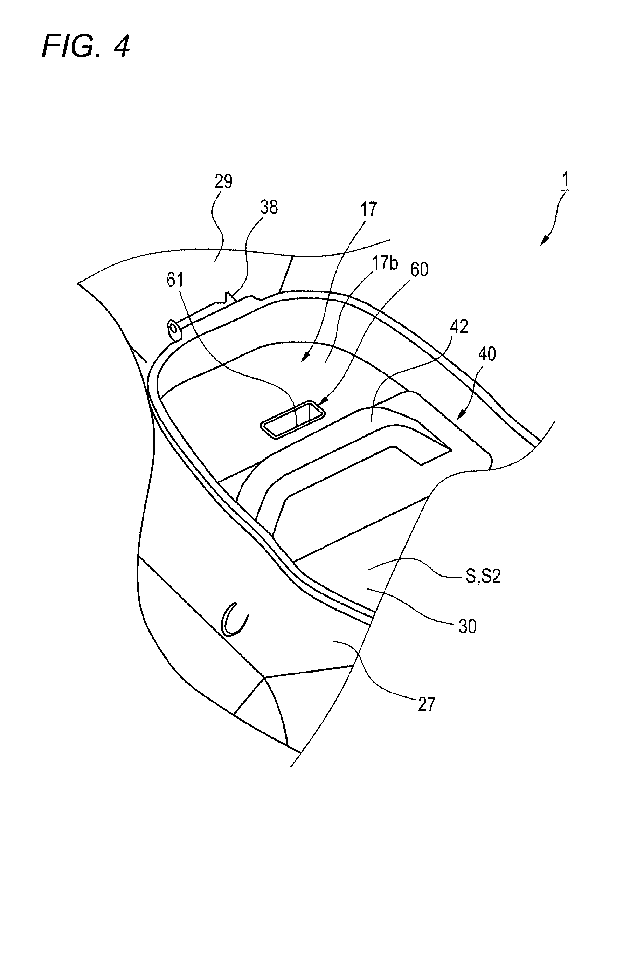

Fig. 4 is a partly enlarged perspective view of the second accommodation portion S2 in a state that the seat 29 is opened according to the embodiment.

As shown in Fig. 4, the seat 29 swings around the hinge portion 38, to thereby open the opening portion 30 which opens upward of the second accommodation portion S2. Further, by swinging the seat 29 in a direction which is reverse direction at the time of opening the seat 29 around the hinge portion 38, the seat 29 closes the opening portion 30. As such, the seat 29 functions as a lid which is able to close the second accommodation portion S2. The seat 29 closes the opening portion 30 to thereby prevent the rain water or dust from invading into the second accommodation portion S2.

Next, with referring to Fig. 5, a charging operation of the battery 6 of the electric motorcycle 1 according to the embodiment will be described.

Note that in the embodiment, it is charged while the portable charger 40 is accommodated in the second accommodation portion S2. Further, a person who does charging work is assumed as the rider, but it is not limited thereto, the other person concerned may do the charging work.

Fig. 5 is a partly enlarged sectional view showing a state in which the battery 6 is charged by using the portable charger 40 according to the embodiment.

First, the cables 47, 48 which are stored in the cable store portion 43 of the portable charger 40 are pulled out in the state that the seat 29 is in the open position (refer to Fig. 4). Then, the power plug is inserted to the power tap (not shown) to thereby be connected with the power source. The cover mounted to the connection port 61 of the receptacle 60 is removed and the charge plug 46 is inserted into the connection port 61 of the receptacle 60. Then, the receptacle 60 is connected with the charge plug 46. After the rider confirms the connection state, the portable charger 40 is driven to thereby supply the electric power from the electric source to the battery 6 via the portable charger 40 and the charge of the battery 6 is started.

To avoid the influence of outer environment such as water rain during charge, the lock mechanism 70 makes the seat 29 in the state of the gap forming position to thereby form the gap space between the seat 29 and the opening portion 30 of the second accommodation portion S2, then the seat 29 covers the opening portion 30. Thus, it is able to ventilate through the gap space. That is, the seat 29, the opening portion 30 of the second accommodation portion S2 and the lock mechanism 70 functions as a ventilation portion which ventilates outside and inside of the vehicle. At this time, the power cable 48 is pulled out from the gap space between the seat 29 and the opening portion 30 of the second accommodation portion S2. This gap space functions as a power cable pulling out portion in which the power cable 48 is pulled out from the second accommodation portion S2 to outside of the vehicle in a state that the portable charger 40 is accommodated in the second accommodation portion S2.

During charging the battery 6, the fan device 45 of the portable charger 40 is driven, and the air is taken from the gap space between the seat 29 and the opening portion 30 of the second accommodation portion S2. Next, the air passes through the gap space under the charger main body 41, and taken into an interior of the charger main body 41 through the ventilation port 49 at the bottom surface portion of the charger main body 41. Then, the air taken into the charger main body 41 passes through the fan devices 45, is exhausted to the outside of the charger main body 41 through the ventilation port 49 at the rear surface portion of the charger main body 41, and finally, is exhausted to the outside of the vehicle through the gap space between the seat 29 and the opening portion 30 of the second accommodation portion S2.

Then, when the charge of the battery 6 has completed, after it is confirmed that the operation of the portable charger 40 is stopped, the lock of the lock mechanism 70 is released. Then, the seat 29 is swung around the hinge portion 38 in a direction in which the seat 29 is opened, the seat 29 is in the state of the open position from the gap forming position (refer to Fig. 4). In this state, the power plug is pulled out from the power tap. Further, the charge plug 46 is pulled out from the connection port 61 of the receptacle 60. In a state that the power plug and the charge plug 46 are pulled out, the cables 47, 48 are pulled back to interior of the cable store portion 43. After that, the cover which is stored in other place is mounted to the connection port 61 of the receptacle 60 to thereby close the connection port 61 again. Thus, the cover protects the receptacle 60.

Next, the seat 29 is swung around the hinge portion 38 in the direction in which it closes to thereby close the opening portion 30 of the second accommodation portion S2 and the seat 29 is locked by the lock mechanism 70. At this time, the retainer portion 29c of the seat 29 retains the upper portion of the portable charger 40 and the portable charger 40 is mounted to the second accommodation portion S2 in a stable state. Further, the seat 29 closes the second accommodation portion S2, it is prevented for the rain water or dust from invading into the second accommodation portion S2.

As described above, according to the embodiment, when charging the battery 6 while the portable charger 40 being accommodated in the second accommodation portion S2, the seat 29, the opening portion 30 of the second accommodation portion S2, the lock mechanism 70 and the ventilation port 49 of the portable charger 40 function as a ventilation portion to thereby ventilate the interior of the second accommodation portion S2. Thus, the heat generated in the portable charger 40 at the time of charge is efficiently dissipated from inside to the outside of the second accommodation portion S2. Accordingly, even in the state the seat 29 covers the opening portion 30 of the second accommodation portion S2, the battery 6 can be charged while avoiding the interior of the portable charger 40 accommodated in the second accommodation portion S2 from reaching high temperature. As such, because the battery 6 can be charged by using the portable charger 40 accommodated in the second accommodation portion S2 while the seat 29 covering the opening portion 30, even in a case that the vehicle is placed on a place without any roofs, the battery 6 is charged in a state that the portable charger 40 is water proofed by the seat 29.

Further, according to the embodiment, the connecting part between the connection port 61 of the receptacle 60 and the charge plug 46 is in the interior of the second accommodation portion S2 and is not exposed outside, the connecting part is protected from the dust or water drop of outside.

Further, according to the embodiment, the interior of the second accommodation portion S2 is ventilated by using the gap between the seat 29 and the opening portion 30 of the second accommodation portion S2.

Further, according to the embodiment, the seat 29 is retained in the gap forming position, the heat is efficiently dissipated from the inside to the outside of the second accommodation portion S2 through the gap formed between the seat 29 and the opening portion 30 of the second accommodation portion S2.

Further, according to the embodiment, when the battery 6 is charged while the portable charger 40 being accommodated in the second accommodation portion S2, the seat 29 is locked in the gap forming position, the interior of the second accommodation portion S2 is ventilated and it is prevented for the portable charger 40 accommodated in the second accommodation portion S2 from theft.

Further, according to the embodiment, the fan device 45 is driven at the time of charging, the heat is efficiently dissipated from the inside to the outside of the second accommodation portion S2.

Further, according to the embodiment, the seat 29 is used as a lid which is able to close the second accommodation portion S2, in a design of a vehicle body of the straddle-type electric vehicle, the limited design space is effectively utilized and the space of the second accommodation portion S2 is assured large.

### (Second embodiment)

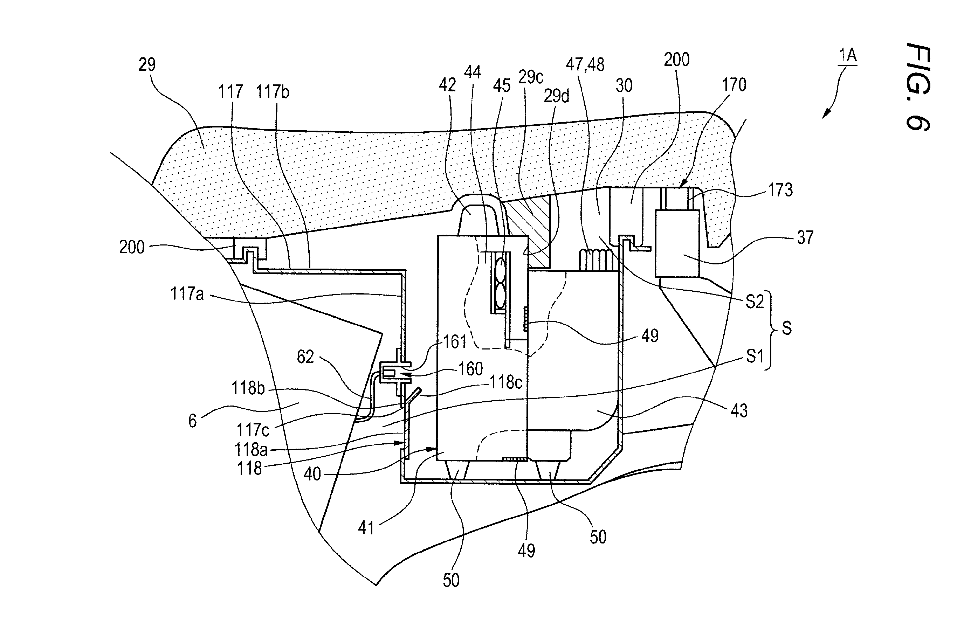

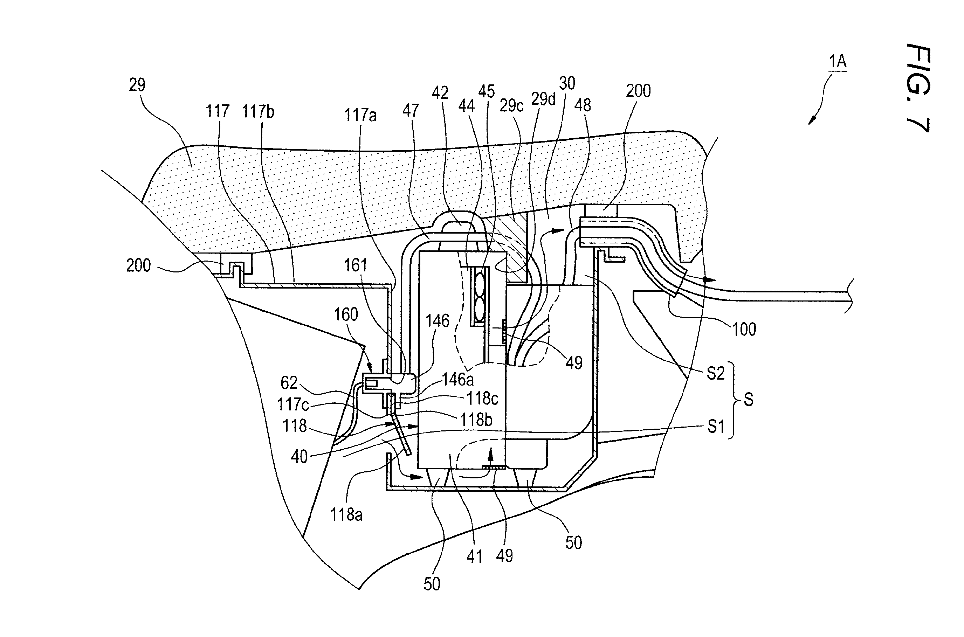

Next, a straddle-type electric vehicle according to a second embodiment of the invention is described with reference to Figs. 6 and 7.

Note that as for the same or similar parts to those of the first embodiment, their descriptions are omitted or simplified by giving the same or similar reference numerals on the drawings.

Fig. 6 is a partly enlarged sectional view of an accommodation portion S in the front-and-rear direction in a state that the seat 29 is closed according to the embodiment.

In an electric motorcycle 1A according to the embodiment, differing from the above described first embodiment, the lock mechanism 170 is configured so that the seat 29 is movable between a close position in which the seat 29 closes the opening portion 30 of the second accommodation portion S2 and a open position in which the seat 29 opens the opening portion 30 of the second accommodation portion S2.

Further, in this embodiment, a receptacle 160 is provided at a center position of a side wall portion 117a of a parting wall 117. The receptacle 160 includes a connection port 161 to which a charge plug 146 (refer to Fig. 7) of the portable charger 40 is connected. The connection port 161 is provided so as to open toward the second accommodation portion S2. Further, on a lower surface portion of the charge plug 146, provided is a protrusion portion 146a which protrudes downward in a state that it is connected with the connection port 161 of the receptacle 160.

Further, on the side wall portion 117a of the parting wall 117, a rectangular communication port 117c is formed on a position downward of the connection port 161 of the receptacle 160. A movable lid 118 is mounted to the side wall portion 117a of the parting wall 117 so as to cover the communication port 117c from the side of the second accommodation portion S2.

The movable lid 118 is configured to include a rectangular lid main body 118a which directly covers the communication port 117c, a lid hinge portion 118b provided at an upper end portion of the lid main body 118a and a lid pawl portion 118c which extends upward and rearward from the lid hinge portion 118b and is curved shape in section. The lid hinge portion 118b is connected with the side wall portion 117a of the parting wall 117, and thus, the movable lid 118 is able to be swung around the lid hinge portion 118b so as to open the communication port 117c. Further, the lid pawl portion 118c is formed so as to contact with the protrusion portion 146a of the charge plug 146 at the back portion thereof in a state that the charge plug 146 is connected with the connection port 161 of the receptacle 160.

Further, according to the embodiment, the power cable 48 is passed through a cylindrical member 100 having a ring shape in section and the cylindrical member 100 is attached to the power cable 48. The cylindrical member 100 is formed into an S-shape from a middle portion thereof in the longitudinal direction. Further, an inner diameter of the cylindrical member 100 is designed to be larger than an outer diameter of the power cable 48. Thus, the cylindrical member 100 is slidable along with the longitudinal direction with respect to the power cable 48.

Next, referring to Fig. 7, a charge work of the battery 6 according to the electric motorcycle 1 of the embodiment will be described.

Note that in this embodiment, too, the charge is performed while the portable charger being accommodated in the second accommodation portion S2.

Fig. 7 is a partly enlarged sectional view of the accommodation portion S in the front-and-rear direction in a state that the battery 6 is charged by using the portable charger 40 according to the embodiment.

First, the charge cable 47 stored in the cable store portion 43 of the portable charger 40 and the power cable 48 to which the cylindrical member 100 is mounted are pulled out in the state that the seat 29 is in the open position (refer to Fig. 4). Then, the power plug (not shown) is inserted into the power tap (not shown) to thereby connect with the power source. The charge plug 146 is inserted into the connection port 161 of the receptacle 160. Thus, the receptacle 160 connects with the charge plug 146. After the rider confirms the connection state, the portable charger 40 is driven to thereby supply electric power from the power source to the battery 6 through the portable charger 40 and the charge of the battery 6 is started.

Here, as the charge plug 146 is inserted into the connection port 161 of the receptacle 160, the protrusion portion 146a of the charge plug 146 contacts with the back portion of the lid pawl portion 118c of the movable lid 118. Then, the movable lid 118 is swung around the lid hinge portion 118b and the communication port 117c is opened. Accordingly, the communication port 117c is opened to thereby take in the outside air of the second accommodation portion S2.

Note that, in this embodiment, the first accommodation portion S1 in which the battery 6 is accommodated communicates with the space outside of the vehicle.

The cylindrical member 100 is slid along with the longitudinal direction of the power cable 48 and provided at a rear end portion of the second accommodation portion S2. In this state, the seat 29 is swung around the hinge portion 38 in a direction in which the seat 29 closes to thereby close the opening portion 30 of the second accommodation portion S2 and lock the seat 29. At this time, the cylindrical member 100 is pinched and fixed by the seat 29 and the rear end portion of second accommodation portion S2. Further, because the inner diameter of the cylindrical member 100 is set to be larger than the outer diameter of the power cable 48, even in a state that the seat 29 covers the opening portion 30 of the second accommodation portion S2, it is maintained that the inside space of the second accommodation portion S2 communicates with the outside space of the vehicle through the gap space of the cylindrical member 100. That is, the cylindrical member 100, the communication port 117c and the movable lid 118 function as the ventilation portion which ventilates the inside and the outside of the vehicle.

Further, the power cable 48 is pulled out while passing through the inner diameter portion of the cylindrical member 100. That is, the cylindrical member 100 functions as the power cable pulling out portion which pulls out the power cable 48 from the inside of the second accommodation portion S2 to the outside of the vehicle while the portable charger 40 being accommodated in the second accommodation portion S2.

During charging the battery 6, the fan device 45 of the portable charger 40 is driven and the air is taken from the communication port 117c of the parting wall 117, next, the air passes through the gap space provided lower than the charger main body 41 and is taken in the charger main body 41 through the ventilation port 49 of the bottom surface portion of the charger main body 41. Then, the air taken into the charger main body 41 passes through the fan device 45 and exhausted to the outside of the charger main body 41 through the ventilation port 49 at the rear surface portion of the charger main body 41, and finally, the air is exhausted to the outside of the vehicle through the gap space of the cylindrical member 100.

The other configurations of the embodiment are similar to those of the above described first embodiment.

As described above, according to the electric motorcycle 1A which is an example of the straddle-type electric vehicle according to the embodiment, when the portable charger 40 charges the battery 6 while being accommodated in the second accommodation portion S2 which is as the accommodation portion, the cylindrical member 100, the communication port 117c of the parting wall 117, the movable lid 118 and the ventilation port 49 of the portable charger 40 function as the ventilation portion to thereby ventilate interior of the second accommodation portion S2. Accordingly, the heat generated in the portable charger 40 can be efficiently dissipated from the inside to the outside of the second accommodation portion S2.

The other configurations and effects are similar to those of the above described first embodiment.

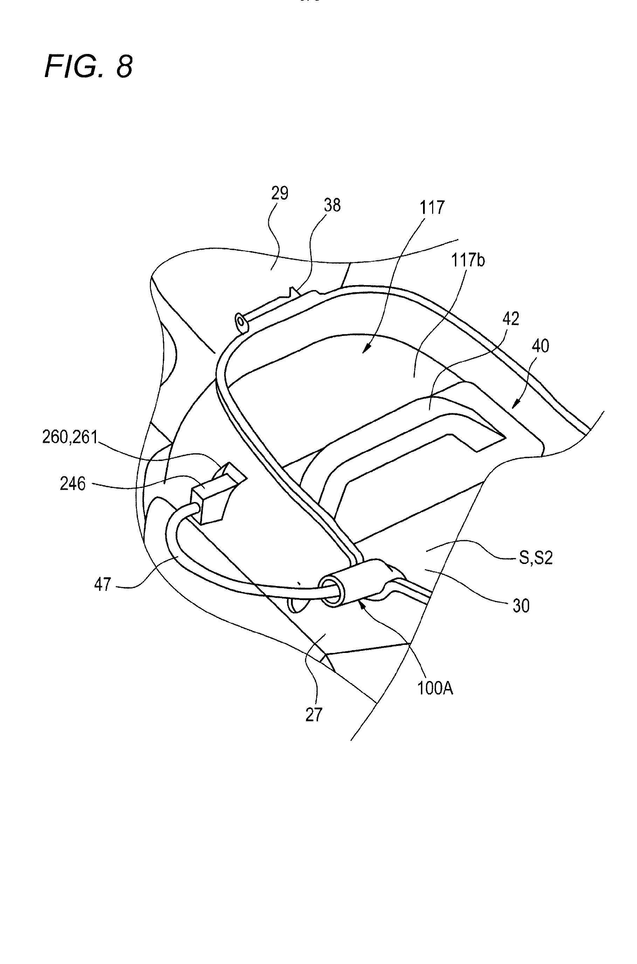

Next, a variation example according to the second embodiment will be described with reference to Fig. 8.

Note that as for the same or the similar parts as those of the second embodiment, their descriptions are omitted or simplified by giving the same or similar reference numerals on the drawing.

Fig. 8 is a partly enlarged perspective view of an accommodation portion S showing a state that the seat 29 is opened according to the variation example.

According to the variation example, a connection port 261 of a receptacle 260 is provided on a side surface portion of the vehicle body and is not provided inside the accommodation portion S. That is, the receptacle 260 is provided in a position where the connection port 261 opens outside of the accommodation portion S.

Here, although the cylindrical member 100 is mounted to the power cable 48 in the second embodiment (refer to Fig. 7), according to the variation example, the cylindrical 100A is mounted to the charge cable 47, too.

As such, according to the variation example, the cylindrical members 100, 100A function as a ventilation portion which ventilates outside and inside of the vehicle and also function as a charge cable pulling out portion and a power cable pulling out portion which pull out the charge cable 47 and the power cable 48 from the second accommodation portion S2 to the outside of the vehicle while accommodating the portable charger 40 in the second accommodation portion S2.

The other configurations are similar to those of the above described second embodiment.

As described above, according to the variation example, because the receptacle 261 connects with the charge plug 246 at the outside of the accommodation portion S, the interior space of the accommodation portion S is assured large.

The other configurations and effects are similar to those of the above described second embodiment.

Hereinbefore, although the invention is described while exemplifying the first and second embodiments, the invention is not limited thereto.

For an example, even though, in the first and second embodiments, an example in which the second accommodation portion has the opening portion opening upward of the vehicle is exemplified, the invention is not limited thereto. The second accommodation portion may be formed so that the opening portion opens forward or rearward of the vehicle. Further, even though, in the first and second embodiments, an example in which the second accommodation portion accommodating the portable charger is provided under the seat, the second accommodation portion may be provided on other places as far as it is able to accommodate the portable charger.

Further, in the above described embodiments, although the electric motorcycle is exemplified, the invention may apply to the vehicle other than the electric motorcycle such as an electric tricycle as far as the straddle-type vehicle.

In addition, various design alterations can be made within the scope of matters described in claims.

The invention is specifically described with reference to particular embodiments, but it is apparent for the skilled person to vary or modify without departing from the spirit and the scope of the invention.

This patent application is based on Japanese Patent Application No. 2011-280767 filed on December 22, 2011 and Japanese Patent Application No. 2012-273284 filed on December 14, 2012, the contents of which are incorporated herein by reference.

### Description of Reference Numerals

1, 1A: electric motorcycle (an example of a straddle-type electric vehicle)
6: battery
17, 117: parting wall
17a, 117a: side wall portion
17b, 117b: upper wall portion
29: seat (an example of a lid and a ventilation portion)
29c: retainer portion
30: opening portion (an example of a ventilation portion)
40: portable charger
41: charger main body
42: handle portion
43: cable store portion
44: charge circuit
45: fan device
46: charge plug
47: charge cable
48: power cable
49: ventilation port (an example of a ventilation portion)
60, 160, 260: receptacle
61, 161, 261: connection port
70: lock mechanism (an example of a ventilation portion and a lid support mechanism)
71: lock portion
72: lock pin
73: lock shaft
74: first lock portion
75: second lock portion
100, 100A: cylindrical member (an example of a ventilation portion, a power cable pulling out portion and a charge cable pulling out portion)
117c: communication port (an example of a ventilation portion)
118: movable lid (an example of a ventilation portion)
118a: lid main body
118b: lid hinge portion
118c: lid pawl portion
S: accommodation portion
S1: first accommodation portion
S2: second accommodation portion (an example of an accommodation portion)

## Claims

1. A straddle-type electric vehicle comprising:
an accommodation portion including an opening portion and a lid which is able to open and close the opening portion;
a portable charger which is configured to be accommodated in the accommodation portion; and
a receptacle connected with a battery mounted on a vehicle,
wherein the portable charger includes a charger main body, a power plug connected with a power source, a power cable which connects the power plug with the charger main body, a charge plug connected with the receptacle and a charge cable which connects the charger main body with the charge plug,
the accommodation portion includes a power cable pulling out portion which pulls out the power cable from inside to outside of the accommodation portion in a state that the portable charger is accommodated in the accommodation portion and a ventilation portion which ventilates inside of the accommodation portion in a state that the portable charger is accommodated in the accommodation portion,
the lid is closable the opening of the accommodation portion when the power cable is not pulled out from the inside to the outside of the accommodation portion through the power cable pulling out portion and
the ventilation portion ventilates the inside of the accommodation portion when the power cable is pulled out from the inside to the outside of the accommodation portion through the power cable pulling out portion.

2. A straddle-type electric vehicle according to claim 1,
wherein the receptacle is provided on a position where a connection port thereof opens inside of the accommodation portion and the portable charger is accommodated in the accommodation portion in a state that the charge plug is connected thereto.

3. A straddle-type electric vehicle according to claim 1,
wherein the receptacle is provided in a position where a connection port thereof opens outside of the accommodation portion and
the accommodation portion includes a charge cable pulling out portion which pulls out the charge cable from inside to outside of the accommodation portion while the portable charger being accommodated in the accommodation portion.

4. A straddle-type electric vehicle according to any one of claims 1 to 3,
wherein at least a part of the power cable pulling out portion and the ventilation portion are made up of the lid and the opening portion,
the power cable is pulled out from a space between the lid and the opening portion and
the accommodation portion is ventilated through the space between the lid and the opening portion.

5. A straddle-type electric vehicle according to any one of claims 1 to 4,
wherein the lid is configured to move among a close position in which it closes the opening portion of the accommodation portion, an open position in which it opens the opening portion of the accommodation portion and a gap forming position in which it forms a gap between the lid and the opening portion,
the accommodation portion includes a lid support mechanism which retains the lid in the gap forming position and
the lid, the opening portion and the lid support mechanism make up at least a part of the ventilation portion.

6. A straddle-type electric vehicle according to claim 5,
wherein the lid support mechanism is a lock mechanism which locks the lid when the lid is in the close position and the gap forming position.

7. A straddle-type electric vehicle according to any one of claims 1 to 6,
wherein the portable charger includes a fan device and
the fan device is configured to work while the portable charger being accommodated in the accommodation portion and to enhance ventilation of an interior of the accommodation portion.

8. A straddle-type electric vehicle according to any one of claims 1 to 7,
wherein the lid is a seat.

## Amended claims

### Amended claims under Art. 19.1 PCT

**1.** (amended) A straddle-type electric vehicle comprising:
an accommodation portion including an opening portion and a lid which is able to open and close the opening portion;
a portable charger which is conf igured to be accommodated in the accommodation portion; and
a receptacle connected with a battery mounted on a vehicle,
wherein the portable charger includes a charger main body, a power plug connected with a power source, a power cable which connects the power plug with the charger main body, a charge plug connected with the receptacle and a charge cable which connects the charger main body with the charge plug,
the accommodation portion includes a power cable pulling out portion which pulls out the power cable which connects the power plug which is connected with a power source with the charger main body from inside to outside of the accommodation portion in a state that the portable charger is accommodated in the accommodation portion and a ventilation portion which ventilates inside of the accommodation portion in a state that the portable charger is accommodated in the accommodation portion,
the lid is closable the opening of the accommodation portion when the power cable is not pulled out from the inside to the outside of the accommodation portion through the power cable pulling out portion and
the ventilation portion ventilates the inside of the accommodation portion when the power cable is pulled out from the inside to the outside of the accommodation portion through the power cable pulling out portion.

**2.** A straddle-type electric vehicle according to claim 1,
wherein the receptacle is provided on a position where a connection port thereof opens inside of the accommodation portion and the portable charger is accommodated in the accommodation portion in a state that the charge plug is connected thereto.

**3.** A straddle-type electric vehicle according to claim 1,
wherein the receptacle is provided in a position where a connection port thereof opens outside of the accommodation portion and
the accommodation portion includes a charge cable pulling out portion which pulls out the charge cable from inside to outside of the accommodation portion while the portable charger being accommodated in the accommodation portion.

**4.** A straddle-type electric vehicle according to any one of claims 1 to 3,
wherein at least a part of the power cable pulling out portion and the ventilation portion are made up of the lid and the opening portion,
the power cable is pulled out from a space between the lid and the opening portion and
the accommodation portion is ventilated through the space between the lid and the opening portion.

**5.** A straddle-type electric vehicle according to any one of claims 1 to 4,
wherein the lid is configured to move among a close position in which it closes the opening portion of the accommodation portion, an open position in which it opens the opening portion of the accommodation portion and a gap forming position in which it forms a gap between the lid and the opening portion,
the accommodation portion includes a lid support mechanism which retains the lid in the gap forming position and
the lid, the opening portion and the lid support mechanism make up at least a part of the ventilation portion.

**6.** A straddle-type electric vehicle according to claim 5,
wherein the lid support mechanism is a lock mechanism which locks the lid when the lid is in the close position and the gap forming position.

**7.** A straddle-type electric vehicle according to any one of claims 1 to 6,
wherein the portable charger includes a fan device and
the fan device is configured to work while the portable charger being accommodated in the accommodation portion and to enhance ventilation of an interior of the accommodation portion.

**8.** A straddle-type electric vehicle according to any one of claims 1 to 7,
wherein the lid is a seat.

Statement under Art. 19.1 PCT
Claim 1 was amended so as to clarify the following point.

(A) a power cable pulling out portion which pulls out the power cable which connects the power plug which is connected with a power source with the charger main body from inside to outside of the accommodation portion

With regard (A), the amendment basis are paragraph 0059 of the original specification, Figure 5, and the like.

Note that as for the recognition of the document 1 in the written opinion, there are errors in the following points at least.

In the document 1, equivalent to the charging cable of the present application has been described as connecting cord 19, but there is no description of the one that corresponds to the power supply cable of the present application. In the document 1, there are described in paragraph 0025, a charger 9 can be accommodated in a glove compartment 7, but there is no description that it is charged while accommodating the charger 9 in the glove compartment 7. Further, the charger shown in Figure 5 is not illustrated in Figure 7 which seems to show charge state. Rather, the facts that "connecting the battery 2 via a connection cord 19 to the charger 9 which is connected to a power supply for home" in paragraph 0032, there is no description corresponding to the power cable of the present invention as described herein and the connection cord 19 for connecting between the charger 9 and the battery 2 as pulling out from the inside of the housing portion in Figure 7 is shown, it is reasonable to interpret that the charger is located in the immediate vicinity of the power supply for home at the time of charge, and it is not accommodated in the glove compartment 7.

Because the charger is not accommodated in the glove compartment at the time of charge, there are no teachings or suggestions about the description of the problems to transmit the heat generated from the charger to the outside from the inside of the housing portion. Thus, there are no motivations to apply the document 2 disclosing the cooling fan or the document 3 disclosing the louver to the document 1.
